# EUROPÄISCHE PATENTSCHRIFT

(11) **EP 4 442 474 B1**
(45) Veröffentlichungstag und Bekanntmachung des Hinweises auf die Patenterteilung: **25.02.2026**
(21) Anmeldenummer: 24163048.2
(22) Anmeldetag: 12.03.2024
(51) Int. Cl.: B60C 15/00, B60C 15/06

(54) **FAHRZEUGREIFEN UND VERFAHREN ZUR HERSTELLUNG EINES VERLÄNGERTEN APEX**
VEHICLE TIRE AND METHOD OF FORMING AN EXTENDED APEX
PNEU DE VÉHICULE ET PROCÉDÉ DE FABRICATION D'UN APEX ALLONGÉ

(30) Priorität: 04.04.2023 DE 102023203105
(43) Veröffentlichungstag der Anmeldung: 09.10.2024
(73) Patentinhaber: Continental Reifen Deutschland GmbH, 30175 Hannover (DE)
(72) Erfinder: Günan, Faruk, 30175 Hannover (DE)
(74) Vertreter: Continental Corporation

(56) Entgegenhaltungen:
- EP-A1- 3 135 506
- EP-A1- 3 581 403
- CN-A- 110 281 705
- KR-A- 20100 044 660

## Beschreibung

Die Erfindung betrifft einen Fahrzeugreifen, umfassend eine Karkasse mit einer Karkasslage, einen Wulstkern und einen radial oberhalb des Wulstkerns auf diesem aufsitzenden Wulstkernreiter, wobei die Karkasslage um den Wulstkern und den Wulstkernreiter herum umgeschlagen ist.

Es ist üblich, in einem Fahrzeugreifen gemäß dem Oberbegriff einen Wulstkern und einen Wulstkernreiter vorzusehen und wie beschrieben in einer Karkasslage einzubetten. Der Wulstkern dient dabei in bekannter Weise dem festen Sitz des Reifens auf einer Felge. Der Wulstkernreiter wird auch als Apex oder Kernprofil bezeichnet und weist in einer von der Axialrichtung und Radialrichtung aufgespannten Schnittebene üblicherweise eine dreieckige Form auf, mit einer an die axiale Breite des Wulstkerns angepassten Grundseite und zwei nach radial oben spitz zulaufenden Schenkeln. Funktional spielen Wulstkernreiter eine Rolle bei der Gewährleistung von Fahrstabilität und präzisem Lenkverhalten sowie von Einfederungskomfort. Die radialen Abmessungen des Wulstkernreiters können je nach Reifengröße, Reifentyp und gewünschten Eigenschaften variieren.

Gemäß Stand der Technik wurden Versuche unternommen, die Eigenschaften eines Reifens durch zusätzliche strukturelle Merkmale im Bereich des Wulstkernreiters vorteilhaft zu beeinflussen. Beispielsweise sieht JP 5280832 D2 zusätzlich zu dem Wulstkernreiter einen streifenförmigen Apex vor, der sich axial innerhalb des Wulstkernreiters durch den Seitenbereich des Reifens, zwischen axial innerem und äußerem Abschnitt der Karkasslage erstreckt. Dies soll insbesondere bei Reifen mit dünner Seitenwand für eine gute Balance aus Steuerstabilität und Fahrkomfort sorgen. EP3581403 A1 beschreibt eine Wulstverstärkungseinrichtung umfassend eine Wulstversteifung und eine Gummilage, wobei die Gummilage eingerichtet ist, eine Oberfläche der Wulst zu bedecken, die nicht von der Wulstversteifung bedeckt ist. CN110281705 A betrifft einen Stahlkarkassen-Reifen, wobei eine klebrig machende Schicht zwischen der Karkasse und einem Wulstkernreiter angeordnet ist. KR20100044660 A beschreibt einen Reifen mit einer Wulstverstärkung, welche unter anderem die Haltbarkeit und Leistungsfähigkeit des Reifens verbessern soll. EP3135506 A1 beschreibt einen Reifen mit einem Wulstkern und einem Wulstkernreiter, wobei der Kernreiter einen Verstärkungsabschnitt umfasst, der zwischen einem Hauptkörper des Kernreiters und einer Karkasse in der axialen Richtung des Reifens angeordnet ist und sich entlang des Hauptkörpers erstreckt.

Ein Problem bei der Herstellung von Fahrzeugreifen kann darin liegen, dass die Spitze eines Wulstkernreiters beim Umschlagen der Karkasslage relativ zu einer Reifenbautrommel an einer ungünstigen Stelle angeordnet ist. Dies kann sich wie folgt ergeben: Ein axial mittlerer Teil der Karkasslage ist üblicherweise in einer ersten radialen Höhe auf der Reifenbautrommel aufgewickelt. Nach axial außen hin kann der Verlauf der Karkasslage auf eine zweite radiale Höhe wechseln, die kleiner ist als die erste radiale Höhe; der Übergang der Karkasslage von der ersten zu der zweiten Höhe kann entlang eines gekrümmten Abschnitts der Reifenbautrommel erfolgen. In dem axialen Bereich der zweiten radialen Höhe wird der Wulstkern relativ zu der Karkasslage in einer Montageposition platziert, wobei die Montageposition auf einem Niveau zwischen der ersten und zweiten radialen Höhe angeordnet ist. Der auf dem Wulstkern sitzende Wulstkernreiter kann dabei je nach radialer Höhe des Wulstkernreiters mit seiner Spitze deutlich unterhalb der ersten radialen Höhe enden oder eine größere relative Erstreckung aufweisen. In der beschriebenen Anordnung ist die Spitze des Wulstkernreiters an einer ungünstigen Stelle angeordnet, wenn sie an einer Position starker Krümmung und/oder Steigung zwischen der ersten und der zweiten Höhe, insbesondere nahe der ersten Höhe, auf der Karkasslage aufliegt. In diesem Fall kann es beim Umschlagen der Karkasslage um den Wulstkern und den Wulstkernreiter an der Spitze des Wulstkernreiters beispielsweise zu Blasenbildung kommen.

Ein weiteres Problem bei der Ausstattung von Fahrzeugreifen mit Wulstkernreitern kann sein, dass eine bestimmte Höhe eines Wulstkernreiters gewünscht wird, die in einem Standardrepertoire an Wulstkernreitern nicht enthalten ist.

Der Erfindung liegt die Aufgabe zugrunde, in einem Fahrzeugreifen mit einfachen strukturellen Mitteln die Funktion eines stabilen Wulstkernreiters flexibler Länge zu erzielen.

Die gestellte Aufgabe wird erfindungsgemäß durch die Merkmale der unabhängigen Ansprüche, nämlich unter anderem dadurch gelöst, dass ein erster Materialstreifen zwischen der Karkasslage und dem Wulstkernreiter an einer axial inneren Flanke des Wulstkernreiters anliegt, wobei ein zweiter Materialstreifen zwischen der Karkasslage und dem Wulstkernreiter an einer axial äußeren Flanke des Wulstkernreiters anliegt, wobei die beiden Materialstreifen radial oberhalb des Wulstkernreiters aufeinander aufliegen.

Indem ein erster und ein zweiter Materialstreifen den Wulstkernreiter von je einer axialen Seite her einschließen, wird der Wulstkernreiter gleichmäßig stabilisiert. Indem die Materialstreifen radial oberhalb des Wulstkernreiters aufeinander aufliegen, kann ein guter Materialzusammenschluss mit entsprechender Stabilität erreicht werden. Somit wird eine stabile radiale Verlängerung des Wulstkernreiters geschaffen.

Sofern in Bezug zu dem Fahrzeugreifen die Richtungsbezeichnungen axial, in Axialrichtung, radial, in Radialrichtung und in Umfangsrichtung verwendet werden, beziehen sich diese auf den bestimmungsgemäß an einem Fahrzeug angebrachten Fahrzeugreifen und seine daran vollzogene Rollbewegung. Hierin bezieht sich die Radialrichtung auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist. In Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 360° Umdrehung des Fahrzeugreifens früher einen minimalen Abstand zum Fahrbahnuntergrund als eine in Umfangsrichtung hintere Position, wobei die in Umfangsrichtung hinteren Position weniger als 180° hinter der vorderen Position ihren minimalen Abstand zum Fahrbahnuntergrund durchläuft. Die Axialrichtung bezieht sich auf eine Richtung parallel zur Drehachse. Axial nach innen zeigend bezieht sich dabei auf eine Orientierung, die einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Die mit den Merkmalen des Hauptanspruchs erzielten Effekte werden durch bevorzugte Ausführungsformen und Ausgestaltungen unterstützt und weiter verstärkt.

In einer bevorzugten Ausführungsform läuft der Wulstkernreiter an einer dem Wulstkern abgewandten Seite in einer zu der Umfangsrichtung senkrechten Schnittebene betrachtet spitz zu. Auf diese Weise können die beiden Materialstreifen radial oberhalb des Wulstkernreiters ohne Knicke und ohne Hohlraum direkt aufeinander aufgebracht werden.

Der Wulstkern und der Wulstkernreiter können sich in radialer Richtung gemeinsam über eine Höhe zwischen 10 mm bis 25 mm erstrecken. Von dieser Höhe aus kann auf die erfindungsgemäße Weise auf eine Gesamtlänge von beispielsweise 30 mm verlängert werden. Die eingangs beschriebene Problematik, der zufolge die Spitze eines Wulstkernreiters relativ zu der Reifenbautrommel an einer ungünstigen Stelle liegen kann, kann sich insbesondere bei Wulstkernreitern einstellen, die sich ohne die erfindungsgemäße Verlängerung zusammen mit dem Wulstkern über 30 mm erstrecken. Insofern kann es sinnvoll sein, von einem kleineren Wulstkernreiter auszugehen und diesen erfindungsgemäß auf ein unter herkömmlichen Herstellungsmethoden eigentlich problematisches Maß zu verlängern.

Alternativ können sich der Wulstkern und der Wulstkernreiter in radialer Richtung gemeinsam über eine Höhe von mehr als 25 mm erstrecken. Auch hierbei kann ein Vorteil erzielt werden, beispielsweise indem ein Wulstkernreiter aus einem Standardrepertoire auf die erfindungsgemäße Weise auf ein ungewöhnliches Maß erweitert wird.

Die Karkasslage ist so um den Wulstkern und den Wulstkernreiter herum umgeschlagen, dass ein axial äußerer Abschnitt der Karkasslage radial oberhalb eines radial unteren Endes des Wulstkernreiters endet. Die Karkasslage kann so um den Wulstkern und den Wulstkernreiter herum umgeschlagen sein, dass ein axial äußerer Abschnitt der Karkasslage radial unterhalb eines radial oberen Endes eines der Materialstreifen oder radial unterhalb der radial oberen Enden beider Materialstreifen endet. Vorzugsweise ist die Karkasslage so um den Wulstkern und den Wulstkernreiter herum umgeschlagen, dass ein axial äußerer Abschnitt der Karkasslage radial oberhalb des Wulstkernreiters von axial außen auf einem axial inneren Abschnitt der Karkasslage aufliegt. Durch die Einbettung von Wulstkern, Wulstkernreiter und Materialstreifen in der Karkasse wird der Konstruktion zusätzliche Stabilität verliehen. Dies ist ein weiterer Unterschied gegenüber JP 5280832 D2, wonach der streifenförmige Apex radial oberhalb des umgeschlagenen axial äußeren Abschnitts der Karkasslage endet.

Alternativ kann die Karkasslage so um den Wulstkern und den Wulstkernreiter herum umgeschlagen sein, dass ein axial äußerer Abschnitt der Karkasslage nicht radial oberhalb des Wulstkernreiters von axial außen auf einem axial inneren Abschnitt der Karkasslage aufliegt. In diesem Fall kann von axial außen eine weitere Karkasslage über den axial äußeren Abschnitt der Karkasslage und einen freiliegenden Abschnitt der Materialstreifen gelegt sein, wodurch die Einbettung von Wulstkern, Wulstkernreiter und Materialstreifen ebenfalls verbessert werden kann.

Der axial äußere Abschnitt der Karkasslage kann ab einem radialen Abstand von 1,1 x e bis 3 x e oberhalb der radialen Unterseite des Wulstkernreiters von axial außen auf dem axial inneren Abschnitt der Karkasslage aufliegen, wobei e der radialen Höhe des Wulstkernreiters entspricht. Anders formuliert können sich die Materialstreifen oder zumindest einer der Materialstreifen bis zu dem genannten Abstand oberhalb der radialen Unterseite des Wulstkernreiters erstrecken, sodass der axial äußere und innere Abschnitt der Karkasslage radial unterhalb des genannten Abstands durch den oder die Materialstreifen getrennt bleiben. Der mit e zu multiplizierende Faktor kann als direkter Ausdruck eines Verlängerungsfaktors des Wulstkernreiters in radialer Richtung betrachtet werden. Der genannte Wertebereich ist hierbei besonders vorteilhaft: Steigt der Faktor über den Wert von 3, kann das Verhältnis zwischen radialer Länge and axialer Dicke des verlängerten Wulstkernreiters zu groß für eine stabile Konfiguration werden. Unterhalb eines Werts von 1,1 kann der Überlapp der zwei Materialstreifen oberhalb der Spitze des Wulstkernreiters zu klein für einen guten Zusammenhalt werden. Auch wenn die Karkasslage nicht so um den Wulstkern und den Wulstkernreiter herum umgeschlagen ist, dass ein axial äußerer Abschnitt der Karkasslage radial oberhalb des Wulstkernreiters von axial außen auf einem axial inneren Abschnitt der Karkasslage aufliegt, kann der beschriebene Verlängerungsfaktor ein vorteilhaftes Maß für die Länge der Materialstreifen sein, sodass sich die Materialstreifen bis zwischen 1,1 x e und 3 x e oberhalb der radialen Unterseite des Wulstkernreiters erstrecken.

Der erste Materialstreifen kann radial weiter nach außen ragen als der zweite Materialstreifen oder der zweite Materialstreifen kann radial weiter nach außen ragen als der erste Materialstreifen. In diesem Fall können der radial weniger weit nach außen ragende Materialstreifen vorzugsweise wenigstens 1,1 x e und der radial weiter nach außen ragende Materialstreifen höchstens 3 x e oberhalb der radialen Unterseite des Wulstkernreiters enden. In jedem Falle ist es vorteilhaft, wenn die Materialstreifen nicht auf der gleichen radialen Höhe enden. Durch einen solchen radialen Versatz entsteht in der zur Umfangsrichtung senkrechten Schnittebene eine gestaffelte Dicke, welche die Dreiecksform des Wulstkernreiters nachempfinden kann. Mit anderen Worten können die beiden Materialstreifen unmittelbar oberhalb der Spitze des Wulstkernreiters mit einer axialen Dicke von zwei Materialstreifen aufeinander liegen und sich gemeinsam über einen radialen Abschnitt des solchermaßen verlängerten Wulstkernreiters erstrecken, wobei radial weiter oben einer der Materialstreifen endet, sodass sich nur noch der andere Materialstreifen mit einer Dicke von einem Materialstreifen bis zur Spitze des verlängerten Wulstkernreiters erstreckt.

Vorzugsweise überschneiden sich der erste und/oder Materialstreifen radial nicht mit dem Wulstkern. Auf diese Weise bleibt die Anordnung auf der radialen Höhe des Wulstkerns schlank. Der erste und/oder zweite Materialstreifen kann bzw. können unmittelbar radial oberhalb des Wulstkerns an dem Wulstkernreiter ansetzen, sodass ein maximaler Überlapp mit der Flanke bzw. den Flanken des Wulstkernreiters entsteht. Auf diese Weise wird eine besonders stabile Konstruktion ermöglicht. Außerdem können durch die radial unteren Enden der Materialstreifen verursachte Stufen an den Flanken des Wulstkernreiters vermieden werden, wenn die radial unteren Enden der Materialstreifen am radial unteren Ende des Wulstkernreiters angeordnet werden.

Der erste und/oder der zweite Materialstreifen können jeweils eine Dicke von 0,2 mm bis 2 mm, vorzugsweise eine Dicke von 0,5 mm bis 1 mm aufweisen. In dem Fahrzeugreifen eingebaut würde sich die Dicke hauptsächlich in Axialrichtung erstrecken. Mit den genannten Werten kann ein guter Kompromiss zwischen Flexibilität und schlankem Design auf der einen Seite und Stabilität auf der anderen Seite gefunden werden.

Die Dicke des ersten Materialstreifens kann sich nach radial oben hin verjüngen und/oder die Dicke des zweiten Materialstreifens kann sich nach radial oben hin verjüngen. Die Dicke kann sich bis auf Null verjüngen, sodass die Materialstreifen an ihren Enden oder über ihre gesamte radiale Länge jeweils ein dreieckiges Profil aufweisen. Hierdurch kann eine Dreiecksform des Wulstkernreiters in der Verlängerung durch die Materialstreifen noch besser nachempfunden werden und Stufen in der Reifenkontur können noch besser vermieden werden. In einer Ausführungsform können die Materialstreifen beispielsweise radial versetzt enden und sich beide zu ihren radial oberen Enden hin in der Dicke verjüngen. Auf diese Weise kann beispielsweise radial direkt über der Spitze des Wulstkernreiters die volle Dicke der beiden Materialstreifen vorliegen, wobei sich die Dicke des Verbunds der beiden Materialstreifen über das Ende eines radial weiter unten endenden Materialstreifens hinweg stufenlos auf die Dicke eines Materialstreifens verringern und mit dem Ende des radial weiter oben endenden Materialstreifens stufenlos auf Null heruntergehen kann.

Erfindungsgemäß umfassen die Materialstreifen und der Wulstkernreiter Kautschukmischungen. Die Kautschukmischungen können sich voneinander unterscheiden und auf die speziellen Anforderungen der verschiedenen Bauteile zugeschnitten sein. Erfindungsgemäß stehen die Shore-Härten D der Materialstreifen einerseits und des Wulstkernreiters andererseits in einem Verhältnis von 1,0 - 5,4 zueinander. Hierdurch kann eine ausreichende Steifigkeit des verlängerten Wulstkernreiters gewährleistet werden.

Die Erfindung betrifft außerdem ein Verfahren zur Herstellung eines Fahrzeugreifens, wobei in Querrichtung zu zwei Seiten der Zielposition eines Wulstkerns ein erster Materialstreifen auf einem axial inneren Abschnitt und ein zweiter Materialstreifen auf einem axial äußeren Abschnitt einer Karkasslage platziert werden, wobei der Wulstkern und ein Wulstkernreiter relativ zu der Karkasslage in einer Montageposition platziert werden, wobei die Karkasslage so um den Wulstkern und den Wulstkernreiter herum umgeschlagen wird, dass der erste Materialstreifen an einer axial inneren Flanke und der zweite Materialstreifen an einer axial äußeren Flanke des Wulstkernreiters anliegen und dass der zweite Materialstreifen radial oberhalb des Wulstkernreiters auf dem ersten Materialstreifen aufliegt.

Vorzugsweise wird die Karkasslage so um den Wulstkern und den Wulstkernreiter herum umgeschlagen, dass der axial äußere Abschnitt der Karkasslage radial oberhalb der Materialstreifen auf dem axial inneren Abschnitt der Karkasslage aufliegt.

Die Materialstreifen können in einer flachen Konfiguration der Karkasslage auf dieser platziert werden, während die Karkasslage beispielsweise auf einem Fließband liegt. Alternativ können die Materialstreifen in einer zylindrischen Konfiguration der Karkasslage auf dieser platziert werden, wenn die Karkasslage beispielsweise auf einer Reifenbautrommel aufgewickelt ist. Die Zielposition des Wulstkerns liegt in jenem axialen bzw. radialen Abschnitt der Karkasslage, von welchem der Wulstkern nach dem Umschlagen der Karkasslage direkt umgeben wird.

Die Montageposition des Wulstkerns und des Wulstkernreiters ist die relative Position, in welche der Wulstkern und Wulstkernreiter für das Umschlagen der Karkasse gebracht werden. Die Montageposition wird durch eine Relativbewegung, also durch Bewegungen des Wulstkerns und Wulstkernreiters und/oder der Karkasslage hergestellt. Beispielsweise kann die Karkasslage auf eine Reifenbautrommel gewickelt werden, woraufhin ein axial äußerer Abschnitt der Karkasslage radial abgesenkt werden kann, sodass der Wulstkern über dem abgesenkten Abschnitt und seitlich eines axial mittleren Abschnitts der Karkasslage in die Montageposition gebracht werden kann. Sind Wulstkern und Wulstkernreiter in der Montageposition, kann die Karkasslage mit geeigneten Mitteln, beispielsweise mit Blähmechanismen und/oder mit Roboterarmen, von einer oder von beiden axialen Seiten des Wulstkerns und Wulstkernreiters aus um diese umgeschlagen werden.

Das Verfahren kann mit weiteren Merkmalen fortgebildet werden, die im Zusammenhang mit dem erfindungsgemäßen Fahrzeugreifen beschrieben sind. Der Fahrzeugreifen kann mit weiteren Merkmalen fortgebildet werden, die im Zusammenhang mit dem erfindungsgemäßen Verfahren beschrieben sind.

Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge.

Die Erfindung wird nachfolgend unter Bezugnahme auf die beigefügten Zeichnungen anhand vorteilhafter Ausführungsformen beispielhaft beschrieben. Es zeigen:
Figur 1 schematisch und ausschnittsweise eine Schnittansicht einer Ausführungsform eines erfindungsgemäßen Fahrzeugreifens,
Figur 2 schematisch und ausschnittsweise eine perspektivische Ansicht einer Reifenbautrommel mit Karkasslage und Materialstreifen,
Figur 3 schematisch und ausschnittsweise eine Schnittansicht auf Reifenbauteile während einer Ausführungsform des erfindungsgemäßen Verfahrens,
Figur 4 schematisch und ausschnittsweise eine Schnittansicht auf Reifenbauteile während einer weiteren Ausführungsform des erfindungsgemäßen Verfahrens.

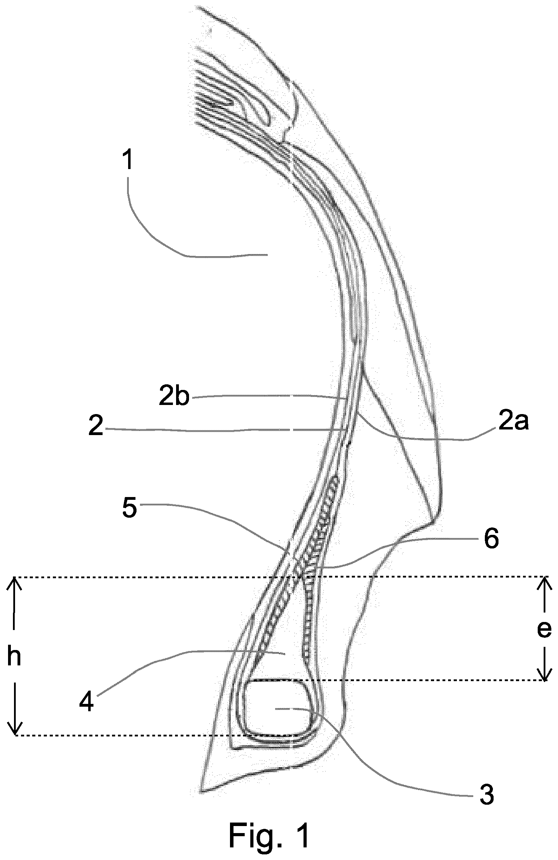

Figur 1 zeigt eine Ausführungsform des erfindungsgemäßen Fahrzeugreifens 1 in einer zur Umfangsrichtung senkrechten Schnittebene, ausschnittsweise zwischen einem Wulstbereich und einem Schulterbereich. Der Fahrzeugreifen 1 ist in an sich bekannter Weise aus an sich bekannten Bauteilen aufgebaut, von denen für das Verständnis der vorliegenden Erfindung wichtige Bauteile mit Referenzzeichen gekennzeichnet sind. Eine Karkasslage 2 ist von einem axial inneren Abschnitt 2b ausgehend mit einem axial äußeren Abschnitt 2a um eine Wulstkern 3 herumgeschlungen. Auf dem Wulstkern 3 sitzt ein im Profil dreieckiger Wulstkernreiter 4. Der Wulstkern 3 und der Wulstkernreiter 4 erstrecken sich gemeinsam radial über eine Höhe h. Der Wulstkernreiter 4 erstreckt sich für sich genommen über eine Höhe e.

An dem axial inneren bzw. äußeren Schenkel des Wulstkernreiters 4 liegen ein erster bzw. ein zweiter Materialstreifen 5, 6 an. Beide Materialstreifen 5, 6 liegen mit ihren radial unteren Enden nahe an dem radial unteren Ende des Wulstkernreiters 4 und oberhalb des radial oberen Endes des Wulstkerns 3. Der erste Materialstreifen 5 ragt radial weiter über die obere Spitze des Wulstkernreiters 4 hinaus als der zweite Materialstreifen 6. Zwischen der Spitze des Wulstkernreiters 4 und dem radial oberen Ende des zweiten Materialstreifens 6 liegen die beiden Materialstreifen 5, 6 aufeinander auf. Durch die radial versetzten Enden der Materialstreifen 5, 6 ergibt sich radial oberhalb des Wulstkernreiters 4 angenähert eine Dreiecksform, welche die Dreiecksform des Wulstkernreiters 4 nachempfindet und radial oberhalb fortsetzt. Radial oberhalb der Materialstreifen 5, 6 liegen die Abschnitte 2a, 2b der Karkasslage 2 aufeinander auf; in der gezeigten Ausführungsform erstreckt sich der umgeschlagene, axial äußere Abschnitt 2a hoch bis unter den Gürtel des Fahrzeugreifens 1, sodass das Ende des axial äußeren Abschnitts in Figur 1 nicht zu sehen ist.

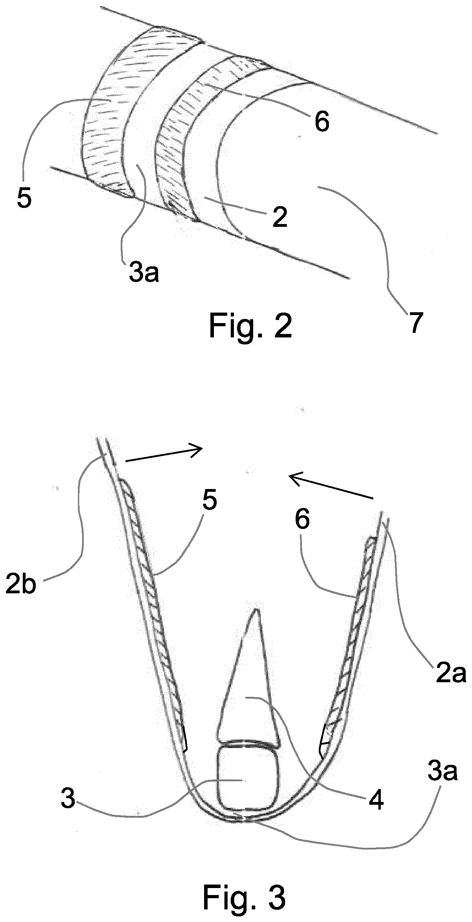

Figur 2 zeigt eine Reifenbautrommel 7, auf die eine Karkasslage 2 aufgewickelt ist. Die Reifenbautrommel 7 ist nur ausschnittsweise abgebildet, sodass entsprechend auch nur ein Teil der Karkasslage 2 zu sehen ist. **In** der Darstellung enthalten ist die axiale Lage einer Zielposition 3a des Wulstkerns 3. **In** diesem Bereich kann die Karkasslage 2 in einem nächsten Schritt um einen Wulstkern 3 herumgeschlagen werden. Axial zu beiden Seiten der Zielposition 3a sind ein erster und ein zweiter Materialstreifen 5, 6 auf der Karkasslage 2 platziert. Die Karkasslage 2 und die Materialstreifen 5, 6 erstrecken sich über den gesamten Umfang der Reifenbautrommel 7 und des späteren Fahrzeugreifens 1.

Figur 3 zeigt eine Zwischenposition der Karkasslage 2 mit den Materialstreifen 5, 6 und des Wulstkerns 3 mit dem Wulstkernreiter 4 während des Umschlagens der Karkasslage 2 gemäß einer Ausführungsform des erfindungsgemäßen Herstellungsverfahrens. Wie für Figur 1 wurde eine Schnittansicht in einer zu der Umfangsrichtung senkrechten Schnittebene gewählt. Die Darstellung ist lediglich als schematisches Grundmuster der relativen Positionen von Karkasslage 2 und Wulstkern 3 sowie Wulstkernreiter 4 zu verstehen und dient der Demonstration eines grundlegenden Bewegungsablaufs; zum Reifenbau benötigte Hilfsmittel wie eine Reifenbautrommel 7 und weitere Werkzeuge sind in Figur 3 der besseren Übersichtlichkeit halber nicht abgebildet. In der gezeigten Ausführungsform befindet sich der Wulstkern 3 in der Zielposition 3a auf der Karkasslage 2, während ein axial innerer Abschnitt 2b und ein axial äußerer Abschnitt 2a der Karkasslage 2a axial aufeinander zu um den Wulstkern 3 und den Wulstkernreiter 4 herum umgeschlagen werden (vgl. Pfeile in Figur 3).

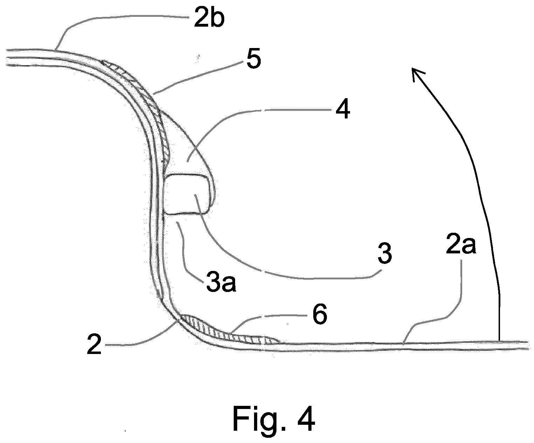

Figur 4 zeigt eine Zwischenposition der Karkasslage 2 mit den Materialstreifen 5, 6 und des Wulstkerns 3 mit dem Wulstkernreiter 4 während des Umschlagens der Karkasslage 2 gemäß einer alternativen Ausführungsform des erfindungsgemäßen Herstellungsverfahrens. Wie für Figur 1 und Figur 3 wurde eine Schnittansicht in einer zu der Umfangsrichtung senkrechten Schnittebene gewählt. Wie zu Figur 3 beschrieben, dient Figur 4 lediglich der Darstellung eines schematischen Grundmusters der relativen Positionen und zur Demonstration eines grundlegenden Bewegungsablaufs. Der axial innere Abschnitt 2b der Karkasslage 2 ist gemäß Figur 4 auf einem höheren radialen Niveau als der axial äußere Abschnitt 2a. Ein solcher Höhenwechsel kann an einer radial innerhalb der Karkasslage 2 liegenden Reifenbautrommel 7 realisiert werden, die in Figur 4 nicht dargestellt ist. Der Übergang erfolgt mit einer gewissen Krümmung, die ebenfalls durch die Reifenbautrommel bestimmt sein kann. Dank des dargestellten Höhenwechsels können der Wulstkern 3 und Wulstkernreiter 4 axial von der Seite radial über den axial äußeren Abschnitt 2a der Karkasslage 2 gebracht werden.

Der Wulstkern 3 und der Wulstkernreiter 4 liegen gemäß Figur 4 bereits in einer Montageposition der dargestellten Ausführungsform, wobei der Wulstkern 3 seitlich bereits in seiner Zielposition 3a an der Karkasslage 2 anliegt. Der axial äußere Abschnitt 2a wird, wie durch den Pfeil in Figur 4 angedeutet, um den Wulstkern 3 und den Wulstkernreiter 4 herum umgeschlagen. Dies kann beispielsweise mittels eines Blähmechanismus geschehen.

Als Endresultat kann mittels eines Herstellungsverfahrens nach beiden Ausführungsformen der Figuren 3 und 4 ein Fahrzeugreifen in der in Figur 1 gezeigten Konfiguration entstehen.

### Bezugszeichenliste

- 1: Fahrzeugreifen
- 2: Karkasslage
- 2a: axial äußerer Abschnitt (der Karkasslage)
- 2b: axial innerer Abschnitt (der Karkasslage)
- 3: Wulstkern
- 3a: Zielposition des Wulstkerns
- 4: Wulstkernreiter
- 5: erster Materialstreifen
- 6: zweiter Materialstreifen
- 7: Reifenbautrommel

## Patentansprüche

1. Fahrzeugreifen (1), umfassend eine Karkasse mit einer Karkasslage (2), einen Wulstkern (3) und einen radial oberhalb des Wulstkerns (3) auf diesem aufsitzenden Wulstkernreiter (4), wobei die Karkasslage (2) um den Wulstkern (3) und den Wulstkernreiter (4) herum umgeschlagen ist, wobei ein erster Materialstreifen (5) zwischen der Karkasslage (2) und dem Wulstkernreiter (4) an einer axial inneren Flanke des Wulstkernreiters (4) anliegt, wobei ein zweiter Materialstreifen (6) zwischen der Karkasslage (2) und dem Wulstkernreiter (4) an einer axial äußeren Flanke des Wulstkernreiters (4) anliegt, wobei die beiden Materialstreifen (5, 6) radial oberhalb des Wulstkernreiters (4) aufeinander aufliegen,
**dadurch gekennzeichnet,**
**dass** die Materialstreifen (5, 6) und der Wulstkernreiter (4) Kautschukmischungen umfassen, wobei die Shore-Härten D der Materialstreifen (5, 6) einerseits und des Wulstkernreiters (4) andererseits in einem Verhältnis von 1,0 - 5,4 zueinander stehen.

2. Fahrzeugreifen (1) gemäß Anspruch 1, **dadurch gekennzeichnet, dass** der Wulstkernreiter (4) an einer dem Wulstkern (3) abgewandten Seite in einer zu der Umfangsrichtung senkrechten Schnittebene betrachtet spitz zuläuft.

3. Fahrzeugreifen (1) gemäß einem der Ansprüche 1 oder 2, **dadurch gekennzeichnet, dass** sich der Wulstkern (3) und der Wulstkernreiter (4) in radialer Richtung gemeinsam über eine Höhe (h) zwischen 10 mm bis 25 mm erstrecken.

4. Fahrzeugreifen (1) gemäß einem der Ansprüche 1 bis 3, **dadurch gekennzeichnet, dass** die Karkasslage so um den Wulstkern (3) und den Wulstkernreiter (4) herum umgeschlagen ist, dass ein axial äußerer Abschnitt (2a) radial oberhalb des Wulstkernreiters (4) von axial außen auf einem axial inneren Abschnitt (2b) der Karkasslage (2) aufliegt.

5. Fahrzeugreifen (1) gemäß Anspruch 4, **dadurch gekennzeichnet, dass** der axial äußere Abschnitt (2a) der Karkasslage (2) ab einem radialen Abstand von 1,1 x e bis 3 x e oberhalb der radialen Unterseite des Wulstkernreiters (4) von axial außen auf dem axial inneren Abschnitt (2b) aufliegt, wobei e der radialen Höhe des Wulstkernreiters (4) entspricht.

6. Fahrzeugreifen (1) gemäß einem der Ansprüche 1 bis 5, **dadurch gekennzeichnet, dass** der erste Materialstreifen (5) radial weiter nach außen ragt als der zweite Materialstreifen (6) oder dass der zweite Materialstreifen (6) radial weiter nach außen ragt als der erste Materialstreifen (5).

7. Fahrzeugreifen (1) gemäß einem der Ansprüche 1 bis 6, **dadurch gekennzeichnet, dass** der erste Materialstreifen (5) sich radial nicht mit dem Wulstkern (3) überschneidet und/oder dass der zweite Materialstreifen (6) sich radial nicht mit dem Wulstkern (3) überschneidet.

8. Fahrzeugreifen (1) gemäß einem der Ansprüche 1 bis 7, **dadurch gekennzeichnet, dass** der erste Materialstreifen (5) eine Dicke von 0,2 mm bis 2 mm, vorzugsweise eine Dicke von 0,5 mm bis 1 mm aufweist und/oder dass der zweite Materialstreifen (6) eine Dicke von 0,2 mm bis 2 mm, vorzugsweise eine Dicke von 0,5 mm bis 1 mm aufweist.

9. Fahrzeugreifen (1) gemäß einem der Ansprüche 1 bis 8, **dadurch gekennzeichnet, dass** sich die Dicke des ersten Materialstreifens (5) nach radial oben hin verjüngt und/oder dass sich die Dicke des zweiten Materialstreifens (6) nach radial oben hin verjüngt.

10. Verfahren zur Herstellung eines Fahrzeugreifens (1), wobei in Querrichtung zu zwei Seiten einer Zielposition (3a) eines Wulstkerns (3) ein erster Materialstreifen (5) auf einem axial inneren Abschnitt (2b) und ein zweiter Materialstreifen (6) auf einem axial äußeren Abschnitt (2a) einer Karkasslage (2) platziert werden, wobei die Zielposition (3a) des Wulstkerns (3) in jenem axialen bzw. radialen Abschnitt der Karkasslage (2) liegt, von welchem der Wulstkern (3) nach dem Umschlagen der Karkasslage (2) direkt umgeben wird, wobei der Wulstkern (3) und ein Wulstkernreiter (4) relativ zu der Karkasslage (2) in einer Montageposition platziert werden, wobei die Karkasslage (2) so um den Wulstkern (3) und den Wulstkernreiter (4) herum umgeschlagen wird, dass der erste Materialstreifen (5) an einer axial inneren Flanke und der zweite Materialstreifen (6) an einer axial äußeren Flanke des Wulstkernreiters (4) anliegen und dass der zweite Materialstreifen (6) radial oberhalb des Wulstkernreiters (4) auf dem ersten Materialstreifen (5) aufliegt,
**dadurch gekennzeichnet,**
**dass** die Materialstreifen (5, 6) und der Wulstkernreiter (4) Kautschukmischungen umfassen, wobei die Shore-Härten D der Materialstreifen (5, 6) einerseits und des Wulstkernreiters (4) andererseits in einem Verhältnis von 1,0 - 5,4 zueinander stehen.

11. Verfahren gemäß Anspruch 10, wobei die Karkasslage (2) so um den Wulstkern (3) und den Wulstkernreiter (4) herum umgeschlagen wird, dass der axial äußere Abschnitt (2a) der Karkasslage (2) radial oberhalb der Materialstreifen (5, 6) auf dem axial inneren Abschnitt (2b) der Karkasslage (2) aufliegt.

## Claims

1. Vehicle tyre (1) comprising a carcass with a carcass ply (2), a bead core (3) and a bead filler (4) which is seated on the bead core (3) radially above the latter, wherein the carcass ply (2) is wrapped around the bead core (3) and the bead filler (4), wherein a first material strip (5) between the carcass ply (2) and the bead filler (4) bears against an axially inner flank of the bead filler (4), wherein a second material strip (6) between the carcass ply (2) and the bead filler (4) bears against an axially outer flank of the bead filler (4), wherein the two material strips (5, 6) bear on one another radially above the bead filler (4),
**characterized**
**in that** the material strips (5, 6) and the bead filler (4) comprise rubber mixtures, wherein the Shore hardness D of the material strips (5, 6) and the Shore hardness D of the bead filler (4) are in a ratio of 1.0-5.4 in relation to one another.

2. Vehicle tyre (1) according to Claim 1, **characterized in that**, when viewed in a section plane perpendicular to the circumferential direction, the bead filler (4) tapers to a point on a side relatively remote from the bead core (3).

3. Vehicle tyre (1) according to either of Claims 1 and 2, **characterized in that** the bead core (3) and the bead filler (4) together extend over a height (h) of between 10 mm and 25 mm in the radial direction.

4. Vehicle tyre (1) according to one of Claims 1 to 3, **characterized in that** the carcass ply is wrapped around the bead core (3) and the bead filler (4) in such a way that, radially above the bead filler (4), an axially outer portion (2a) bears from axially at the outside on an axially inner portion (2b) of the carcass ply (2).

5. Vehicle tyre (1) according to Claim 4, **characterized in that**, from a radial distance of 1.1 x e to 3 x e above the radial bottom side of the bead filler (4), the axially outer portion (2a) of the carcass ply (2) bears from axial at the outside on the axially inner portion (2b), where e corresponds to the radial height of the bead filler (4).

6. Vehicle tyre (1) according to one of Claims 1 to 5, **characterized in that** the first material strip (5) projects radially further outwards than the second material strip (6), or **in that** the second material strip (6) projects radially further outwards than the first material strip (5).

7. Vehicle tyre (1) according to one of Claims 1 to 6, **characterized in that** the first material strip (5) does not radially overlap the bead core (3), and/or **in that** the second material strip (6) does not radially overlap the bead core (3).

8. Vehicle tyre (1) according to one of Claims 1 to 7, **characterized in that** the first material strip (5) has a thickness of 0.2 mm to 2 mm, preferably a thickness of 0.5 mm to 1 mm, and/or **in that** the second material strip (6) has a thickness of 0.2 mm to 2 mm, preferably a thickness of 0.5 mm to 1 mm.

9. Vehicle tyre (1) according to one of Claims 1 to 8, **characterized in that** the thickness of the first material strip (5) tapers radially upwards, and/or **in that** the thickness of the second material strip (6) tapers radially upwards.

10. Method for producing a vehicle tyre (1), wherein, in a transverse direction on two sides of a target position (3a) of a bead core (3), a first material strip (5) is placed on an axially inner portion (2b), and a second material strip (6) is placed on an axially outer portion (2a), of a carcass ply (2), wherein the target position (3a) of the bead core (3) lies in that axial or radial portion of the carcass ply (2) by which the bead core (3) is directly surrounded after the turn-up of the carcass ply (2), wherein the bead core (3) and a bead filler (4) are placed in a fitting position relative to the carcass ply (2), wherein the carcass ply (2) is wrapped around the bead core (3) and the bead filler (4) in such a way that the first material strip (5) bears against an axially inner flank, and the second material strip (6) bears against an axially outer flank, of the bead filler (4), and in that the second material strip (6) bears on the first material strip (5) radially above the bead filler (4),
**characterized**
**in that** the material strips (5, 6) and the bead filler (4) comprise rubber mixtures, wherein the Shore hardness D of the material strips (5, 6) and the Shore hardness D of the bead filler (4) are in a ratio of 1.0-5.4 in relation to one another.

11. Method according to Claim 10, wherein the carcass ply (2) is wrapped around the bead core (3) and the bead filler (4) in such a way that the axially outer portion (2a) of the carcass ply (2) bears on the axially inner portion (2b) of the carcass ply (2) radially above the material strips (5, 6).

## Revendications

1. Pneu de véhicule (1), comportant une carcasse dotée d'une couche de carcasse (2), une tringle (3) et un bourrage sur tringle (4) reposant sur la tringle (3) radialement au-dessus de celle-ci, la couche de carcasse (2) étant rabattue autour de la tringle (3) et du bourrage sur tringle (4), une première bande de matière (5) s'appuyant contre un flanc intérieur axial du bourrage sur tringle (4) entre la couche de carcasse (2) et le bourrage sur tringle (4), une deuxième bande de matière (6) s'appuyant contre un flanc extérieur axial du bourrage sur tringle (4) entre la couche de carcasse (2) et le bourrage sur tringle (4), les deux bandes de matière (5, 6) reposant l'une sur l'autre radialement au-dessus du bourrage sur tringle (4),
**caractérisé**
**en ce que** les bandes de matière (5, 6) et le bourrage sur tringle (4) comportent des mélanges de caoutchouc, les duretés Shore D des bandes de matière (5, 6) d'une part et du bourrage sur tringle (4) d'autre part étant dans un rapport de 1,0 à 5,4 l'une par rapport à l'autre.

2. Pneu de véhicule (1) selon la revendication 1, **caractérisé en ce que** le bourrage sur tringle (4) se termine en pointe, considéré dans un plan de coupe perpendiculaire à la direction périphérique, sur un côté opposé à la tringle (3).

3. Pneu de véhicule (1) selon l'une quelconque des revendications 1 ou 2, **caractérisé en ce que** la tringle (3) et le bourrage sur tringle (4) s'étendent ensemble sur une hauteur (h) comprise entre 10 mm et 25 mm dans la direction radiale.

4. Pneu de véhicule (1) selon l'une quelconque des revendications 1 à 3, **caractérisé en ce que** la couche de carcasse est rabattue autour de la tringle (3) et du bourrage sur tringle (4) de telle sorte qu'une partie axialement extérieure (2a) repose sur une partie axialement intérieure (2b) de la couche de carcasse (2) radialement au-dessus du bourrage sur tringle (4).

5. Pneu de véhicule (1) selon la revendication 4, **caractérisé en ce que** la partie axialement extérieure (2a) de la couche de carcasse (2) repose sur la partie axialement intérieure (2b) axialement depuis l'extérieur à partir d'une distance radiale de 1,1 x e à 3 x e au-dessus du côté inférieur radial du bourrage sur tringle (4), où e est la hauteur radiale du bourrage sur tringle (4).

6. Pneu de véhicule (1) selon l'une quelconque des revendications 1 à 5, **caractérisé en ce que** la première bande de matière (5) fait saillie davantage radialement vers l'extérieur que la deuxième bande de matière (6) ou **en ce que** la deuxième bande de matière (6) fait saillie davantage radialement vers l'extérieur que la première bande de matière (5).

7. Pneu de véhicule (1) selon l'une quelconque des revendications 1 à 6, **caractérisé en ce que** la première bande de matière (5) ne chevauche pas radialement la tringle (3) et/ou **en ce que** la deuxième bande de matière (6) ne chevauche pas radialement la tringle (3).

8. Pneu de véhicule (1) selon l'une quelconque des revendications 1 à 7, **caractérisé en ce que** la première bande de matière (5) présente une épaisseur de 0,2 mm à 2 mm, de préférence une épaisseur de 0,5 mm à 1 mm et/ou **en ce que** la deuxième bande de matière (6) présente une épaisseur de 0,2 mm à 2 mm, de préférence une épaisseur de 0,5 mm à 1 mm.

9. Pneu de véhicule (1) selon l'une quelconque des revendications 1 à 8, **caractérisé en ce que** l'épaisseur de la première bande de matière (5) se rétrécit radialement vers le haut et/ou **en ce que** l'épaisseur de la deuxième bande de matière (6) se rétrécit radialement vers le haut.

10. Procédé de fabrication d'un pneu de véhicule (1), dans lequel, dans une direction transversale à deux côtés d'une position cible (3a) d'une tringle (3), une première bande de matière (5) est placée sur une partie axialement intérieure (2b) et une deuxième bande de matière (6) est placée sur une partie axialement extérieure (2a) d'une couche de carcasse (2), la position cible (3a) de la tringle (3) se situant dans la partie axiale ou radiale de la couche de carcasse (2) par laquelle la tringle (3) est entourée directement après le rabattement de la couche de carcasse (2), dans lequel la tringle (3) et un bourrage sur tringle (4) sont placés dans une position de montage par rapport à la couche de carcasse (2), dans lequel la couche de carcasse (2) est rabattue autour de la tringle (3) et du bourrage sur tringle (4) de telle sorte que la première bande de matière (5) s'appuie contre un flanc axialement intérieur et la deuxième bande de matière (6) s'appuie contre un flanc axialement extérieur du bourrage sur tringle (4) et que la deuxième bande de matière (6) repose sur la première bande de matière (5) radialement au-dessus du bourrage sur tringle (4),
**caractérisé**
**en ce que** les bandes de matière (5, 6) et le bourrage sur tringle (4) comportent des mélanges de caoutchouc, les duretés Shore D des bandes de matière (5, 6) d'une part et du bourrage sur tringle (4) d'autre part étant dans un rapport de 1,0 à 5,4 l'une par rapport à l'autre.

11. Procédé selon la revendication 10, la couche de carcasse (2) étant rabattue autour de la tringle (3) et du bourrage sur tringle (4) de telle sorte que la partie axialement extérieure (2a) de la couche de carcasse (2) repose sur la partie axialement intérieure (2b) de la couche de carcasse (2) radialement au-dessus des bandes de matière (5, 6).
